(19) Europäisches Patentamt

European Patent Office

Office européen des brevets

(11) **EP 1 044 448 B1**

(12) **EUROPEAN PATENT SPECIFICATION**

(45) Date of publication and mention
of the grant of the patent:
**26.01.2005 Bulletin 2005/04**

(21) Application number: **99947301.0**

(22) Date of filing: **09.09.1999**

(51) Int Cl.[7]: **G10L 15/08**, G10L 15/22

(86) International application number:
**PCT/EP1999/006669**

(87) International publication number:
**WO 2000/016311 (23.03.2000 Gazette 2000/12)**

(54) **METHOD FOR ERROR RECOVERY FOR RECOGNISING A USER PRESENTATION THROUGH ASSESSING THE RELIABILITY OF A LIMITED SET OF HYPOTHESES**

VERFAHREN ZUR FEHLERKORREKTUR ZUR ERKENNUNG EINER BENUTZEREINGABE DURCH BESTIMMUNG DER ZUVERLÄSSIGKEIT EINER BEGRENZTEN ZAHL VON HYPOTHESEN

PROCEDE D'EXTRACTION D'ERREUR DANS LA RECONNAISSANCE D'UNE PRESENTATION UTILISATEUR, PAR EVALUATION DE LA FIABILITE D'UN ENSEMBLE LIMITE D'HYPOTHESES

(84) Designated Contracting States:
**DE FR GB**

(30) Priority: **11.09.1998 EP 98203025**

(43) Date of publication of application:
**18.10.2000 Bulletin 2000/42**

(73) Proprietors:
- **Koninklijke Philips Electronics N.V.**
  **5621 BA Eindhoven (NL)**
- **Philips Intellectual Property & Standards GmbH**
  **20099 Hamburg (DE)**

(72) Inventors:
- **RÜBER, Bernhard, J.**
  **D-5656 AA Eindhoven (DE)**
- **KELLNER, Andreas**
  **NL-5656 AA Eindhoven (NL)**
- **SCHRAMM, Hauke**
  **NL-5656 AA Eindhoven (NL)**

(74) Representative: **Volmer, Georg, Dipl.-Ing. et al**
**Philips Intellectual Property & Standards GmbH,**
**Postfach 50 04 42**
**52088 Aachen (DE)**

(56) References cited:
**EP-A- 0 651 372**          **WO-A-87/07460**
**US-A- 5 712 957**

- **WEINTRAUB M: "LVCSR LOG-LIKELIHOOD RATIO SCORING FOR KEYWORD SPOTTING" PROCEEDINGS IEEE INTERNATIONAL CONFERENCE ON ACOUSTICS, SPEECH, AND SIGNAL PROCESSING (ICASSP '95), DETROIT, USA, vol. 1, 9 - 12 May 1995, pages 297-300, XP000657989 INSTITUTE OF ELECTRICAL AND ELECTRONICS ENGINEERS, ISBN: 0-7803-2432-3**
- **KELLNER A ET AL: "Strategies for name recognition in automatic directory assistance systems" PROCEEDINGS IEEE 4TH WORKSHOP INTERACTIVE VOICE TECHNOLOGY FOR TELECOMMUNICATIONS APPLICATIONS (IVTTA '98), TORINO, ITALY, pages 21-26, XP002127629 IEEE, New York, NY, USA, ISBN: 0-7803-5028-6**
- **WEINTRAUB M.: 'LVCSR log-likelihood ratio scoring for keyword spotting' ICASSP '95 vol. 1, 09 May 1995 - 12 May 1995, DETROIT, USA, pages 297 - 300**
- **KELLNER A. ET AL: 'Strategies for name recognition in automatic directory assistance systems' IVTTA '98 27 January 1998, TORINO, ITALY, pages 21 - 26**

## Description

BACKGROUND OF THE INVENTION

The invention relates to a method as recited in the preamble of Claim 1. A prime application of the method is for recognizing speech that can be a basis for searching in various static or dynamic environments, such as telephone directories, train tables, and other. Generally, a human user will need an entry derived from a data base and defined through a string of request components that must be successively recognized. A prime difficulty is that for one or more of these components the spectrum of choice may be orders of magnitude larger than for other components. For example. in a train time table environment there may be several thousands of destination stations, but the departure time can usually be expressed in only a few tens of items, such as the ten digits and combinations thereof, and furthermore certain terms like noon, early, before, and a few others. Other types of databases feature similarly varying levels of search diversity. The inventors have appreciated that the different levels of complexity among the various subtasks associated to recognizing the respective speech items warrant a higher level of organization than recognizing on the level of the respective single words or request components alone. In particular, if the recognizing process has gotten or threatens to get into a dead-end situation, remedy therefor should be undertaken as early as reasonable. Such dead-end situation could occur if the incomplete recognition process still has many possible outcomes, but none of these outcomes can be assessed as representing a possibly correct one: the arrangement of outcomes would thereby be unfeasible.

The method may in similar manner be used for recognizing various other types of user presentation that are represented as a plurality of components, such as a facial image of the user that may be accompanied by a bar-code or another type of code entry, and wherein the face must be matched to a photograph or a set of photographs that is stored in memory. The error remedy may again be various, such as scanning the image with another resolution or another colour filter. A still further type of presentation may be a combination of image and speech.

From the European Patent Application EP 0 651 372 (D1) a method for an automatic speech recognition (ASR) processing using confidence measures is known. According to the disclosure a user interface in an ASR system is dynamically controlled based upon the level of confidence in the results of the ASR process. In one embodiment, the system is arranged to distinguish error prone ASR interpretations from those likely to be correct, using a degree of confidence in the output of the ASR system determined as a function of the difference between the confidence in the "first choice" selected by the ASR system and the confidence in the "second choice" selected by the ASR system. In this embodiment, the user interface is arranged so that the explicit verification steps taken by the system as a result of uncertain information is different from the action taken when the confidence is high.

SUMMARY TO THE INVENTION

In consequence, amongst other things, it is an object of the present invention to let the procedure detect the evolving absence of any way that could lead to success, and upon such detecting, transfer early to an error recovery procedure. Now therefore, according to one of its aspects, the invention is characterized according to the characterizing part of Claim 1. Such error recovery may be on the level of a single word or component, such as having the user person repeat or spell it. On a higher level, it may be that the system poses an inquisitive or exhortatory statement to elicit from the user an utterance that would be better adapted to the actual recognition facilities; for example, the user could then choose another formulation for the request component in question. The invention differs from procedures that test the reliable recognition of only the most recent component, but instead looks to an actually reliable recognition of a combination of components.

The invention also relates to a device being arranged to implement a method as recited supra. Further advantageous aspects of the invention are recited in dependent Claims.

BRIEF DESCRIPTION OF THE DRAWING

These and further aspects and advantages of the invention will be discussed more in detail hereinafter with reference to the disclosure of preferred embodiments, and in particular with reference to the appended Figures that show:

> Figure 1, an exemplary system architecture;
> Figure 2, a letter graph for recognizing the word "Miller";
> Figure 3, a flow chart of the procedure of the invention.

DETAILED DESCRIPTION OF PREFERRED EMBODIMENTS

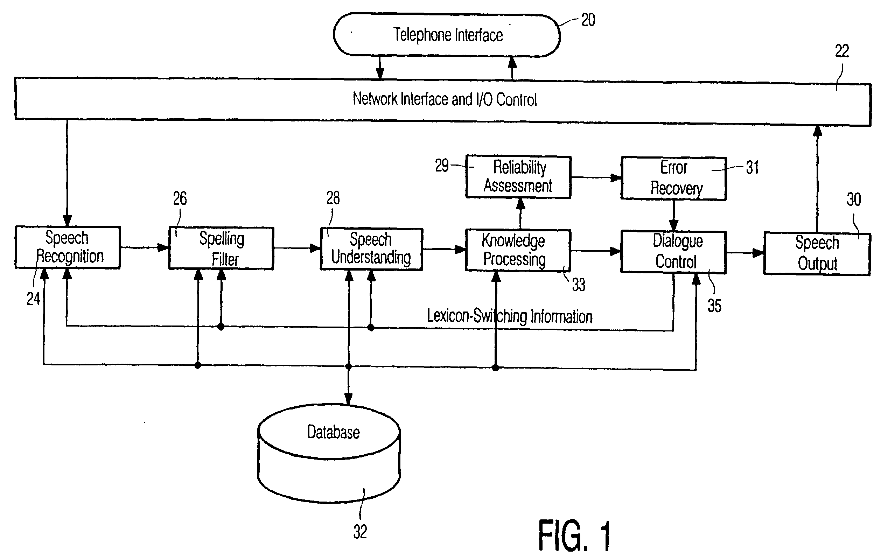

Figure 1 shows an exemplary system architecture with an interface 20 to a telephone system not shown. The system comprises network interface and I/O control unit 22, speech recognizer 24, a special spelling filter or postprocessor 26, speech understanding component 28, speech output unit 30, and data base 32. Further subsystems are: knowledge processing module 33. dialog control module 35, reliability assessment module 29, and error recovery module 31. In the architecture, most modules will read immediately from database 32 to avoid unnecessary copying of large data sets: by themselves, most blocks may correspond to elements known from other systems. The gist of the invention is in particular centered in blocks 29.31 that control the overall policy. Spelling filter 26 should output one or more sequences of exclusively words with associated probability scores. Subsequent to spelling filter 26, the recognizing of single words is finished. For in particular implementing the invention, block 29 assesses actual reliability. If an unreliability is detected, an activation signal is sent to block 31 for effecting error recovery. This block decides in particular, which utterances have to be recovered. Next, dialog control block 35 decides how the error recovery will have to proceed exactly. For example, the dialog control 28 may ask the user for to repeat a particular request component, to spell it, or the recovery can be by steering a user person to provide alternative information. The error can be recovered by combining with earlier data that had been derived by blocks 24, 26 from components already received before.

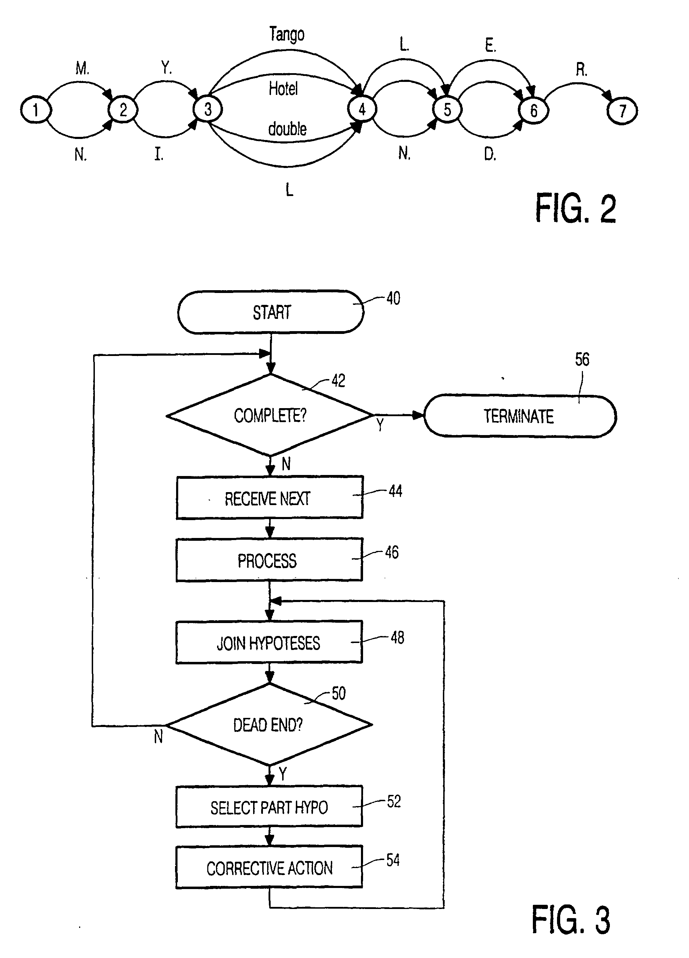

As the interface between speech recognition, spelling, and speech understanding, often word graphs are used. A word graph is a compact representation of various plausible sentence or sequence hypotheses. Every individual path through the graph is a hypothesis. At every dialog turn, the speech recognizer processes the caller's utterance and produces a word graph. In the spelling mode, a detailed graph is used that consists of letters and qualifiers, the latter being used for giving extra information on a particular letter, such as the term "double", "accented". The spelling mode may be controlled either by the system or by the user person. Otherwise, the recognizer is configured to recognize single-word utterances only, so that a word graph then represents one or more candidate strings built from single words. To achieve a better recognition score and real-time operation, the recognizer's vocabulary may switched-over to enable only those words expected in the actual dialog state. In this respect, Figure 2 gives a letter graph for recognizing the word "Miller". The links between various successive states may get scores for recognizing the letters as shown, wherein the third letter may be recognized as a straight alphabetic element ("L"), or an element of an international spelling alphabet, of which the representations for "T" and "H" have been shown. Finally, a qualifier "double" can be used to indicate that the next letter "L" occurs twice. Similar graphs apply to word sequences in a sentence.

Hereinafter, various concrete recognition procedures will be discussed. The hypotheses used for each component thereof carry an indication as to the partial reliability of the associated matching of the component in question with the example. In particular, a score item is formed as the negative log of the *a posteriory* probability that is generated directly by the recognizer proper. As exemplary vehicle, an "N-best list" may be used as an alternative to a word-graph.

Hereinafter, the feasibility is determined for the "set of the best hypotheses", built from the applicable vehicle such as the exemplary N-best list or Word-graph, supra, elements of which which set are selected from all extant hypotheses. In consequence, there is a two-tier selection process, the "set of the best" being selected in the second stage. Now, the elements of an N-best list are $\{(h_1,b_1).....(h_N,b_N)\}$, wherein the hypothesized recognition results are $h_i$, each associated to a respective score $b_i$, the lowest score representing the highest probability. The list elements can be ordered according to increasing scores, and the number N need not be uniform over the recognition procedure. Furthermore by way of example, the "**set of the best** " may consist of only the first **F** hypotheses, such as according to $\{(h_1,b_1),(h_2,b_2),(h_3,b_3)\}$, wherein **F=3.** In the following, the **N-best list** is assumed present and the "set of the best" is assumed to consist of the first $\mathbf{F{\leq}N}$ entries thereof. The setting of **F** will be treated hereinafter.

VARIOUS RELIABILITY MEASURES

A. Various reliability measures **R** may be used, of which a first one is the renormalized probability of the "set of the best":

$$R := \frac{\sum_{i=1}^{F} f(b_i)}{\sum_{i=1}^{N} f(b_i)}$$

In the case of the above scores this is simply: **f(x)=exp(-ax),** wherein for the general case the value of a may differ from 1. The "set of the best" may be defined according to one of the following procedures:

1. Empirically setting a uniform single value for **F**;
2. Empirically setting a score difference $\mathbf{D_s}$, all pairs $(h_i,b_i)$ with $(b_i\text{-}b_1){\leq}\mathbf{D_s}$ being in the set;

B. A next possible reliability measure **R=(1-F/N)**, that is the "relative fraction of the hypotheses **not** in the "set of the best", which measure is generally combined with the score-distance criterium (2).

C. A next possible reliability measure **R** is the absolute number of hypotheses in the "set of the best", generally combined with the score-distance criterium.

D. A next possible reliability measure **R** is the differential score of the first element not in the "set of the best": $\mathbf{R=(b_{F+1}\text{-}b_1)}$. Here, the "set of the best" may be determined by the straight setting of **F**. or by the above renormalized probability (1). After setting an empirical accumulated probability, $\mathbf{0<P_c<1,}$ F is given by the relations $\mathbf{P_F<P_c}$, but

$P_{F+1} \geq P_c$. Herein, $P_F$ is the above renormalized probability of the "best set" with exactly $F$ elements. as given by expression (1).

All described reliability measures have as a consequence for their use, that the feasibility of the set of hypotheses for the combination has a higher probability for recognition if the elements of the set have a higher reliability. The actual level of the reliability may trigger various system responses. In particular, straight thresholding may be applied. That is, if actual reliability is lower, the hypothesis will be discarded as useless, and a special error recovery procedure will be initiated. For example, a user person will be asked to repeat an information that had already been earlier requested by the system. Otherwise, the hypothesis in question will be considered useless. The threshold may be set at different levels that are appropriate for the actually present data.

A particular application for the reliability indicator is to calculate it separately for the hypothesis set of each respective user indication. The feasibility of each of these hypothesis sets will be calculated separately, such as according to the above threshold method.

TWO VARIANTS FOR SIMULTANEOUS USAGE OF PLURAL SETS OF HYPOTHESES

A. In the first place, the various sets of hypotheses for the individual user indications will be combined to produce a new set for the combined indications. In case of a personal name consisting of given name and family name, the N-best list of the complete name will appear, such as {"Christoph Kramm" and "Alexander Klamm"}, these two family names being particularly difficult to be discriminated from each other. Often, such family name is the first item the recognition system will look to. The discussed procedure can be applied on the combined set of hypotheses in similar manner as described, and therefore will contribute to its reliability. If the set is unfeasible for use, this means that at least one of the respective single serialized hypotheses was not useful. Then, and possibly subject to assessing of the various reliabilities of the respective single hypotheses, an appropriate action may be started.

B. In the scenario of the so-called hierarchical recognition, often only the first recognition step is critical. For example, in searching for the correct telephone extension number, the system must recognize the spelling of a single name out of a set of many personal names, in certain cases up to 200.000 or even more. Subsequent recognition steps will often have lexica with no more than in the order of ten entries. If now the procedure according to the invention is applied on the sets of hypotheses pertaining to these latter non-critical recognition steps, their lack of feasibility will lead to consider the earlier hypotheses that pertain to the critical step as being useless from the start. This procedure can therefore be only combined with the immediate reliability of the first recognition step. If the latter one were nevertheless of high reliability, this leads immediately to concluding that the later step is itself unreliable. which incites to take appropriate measures with respect to this later step.

FURTHER PROCEDURES FOR CALCULATING RELIABILITY CRITERIA

In addition to the above discussed procedure, all other standard calculating methods for single reliabilities may be used for the new task. The simplest manner to do so is to use these methods for calculating the (single) reliability levels of the best hypothesis $h_1$ and to use this as a general indication for the overall reliability of the whole set of hypotheses. Various ones of the procedures may be used also in corresponding manner for "set of the best", in corresponding manner as has been done here for the renormalized probability, which had already been used by introducing as a single reliability as described in German Patent Application 19740147.3.

Thereamong, several criteria can provide indications on the recognizing conditions, even independently from the acquired set of hypotheses, and therefore also independently from the respective single assessments therein. For example, the adaptation quality of noise interference models may indicate whether a speech recognition system is being used in a noisy environment, which offers an actual adversity that leads to recognition difficulties. Other such adverse environments can be due to very loud or very soft speaking, etcetera. Countermeasures will also provide information for the use as discussed in hierarchical recognizing, because they can detect problems with subsequent non-critical recognition steps that follow a useful first recognition step.

Figure 3 is a flow chart of the procedure of the invention. In block 40, the procedure is started with assignment of the necessary hardware and software facilities. In block 42 the system detects whether for the actual user requirement the procedure has effectively become complete. If yes, in block 56 the procedure is terminated with effecting the appropriate action viz à viz a user, such as by outputting the required information in speech or hardcopy, or by driving a service authority into rendering the appropriate service. Otherwise, the system in block 44 receives the next element of the user utterance or utterances. If appropriate, this may be effected in a dialog organization. The system-outputted speech has been omitted for brevity. In block 46, the next element, is processed by the system for recognition, and if appropriate, also for its understanding. As recited earlier, this will produce a set of hypotheses for the element in question. In block 48, the hypotheses are joined with such earlier hypotheses as remaining "in the race" from the recognition process as executed up to then, so that a set of joined hypotheses are formed, each having its own associated reliability quantity. In block 50, the set of hypotheses now formed is assessed with respect to an outlook for possibly successful recognition or otherwise, with respect to occurrence of a dead-end situation. If no such dead-end situation is expected, the system returns to block 42. If however, the outlook for success is bleak, the system proceeds to block 52, wherein one of the partial hypotheses now present is selected for necessary improvement, and in block 54, corrective action is being undertaken. Subsequently, the upgraded hypothesis from the corrective action is fed back into block 48. The above upgrading may again be effected in a dialog structure, and if the case be, effectively in a smaller version of the overall Figure as shown, which for brevity has been symbolized by the block 54 only.

**Claims**

1. A method for recognizing a user presentation that is represented as a plurality of physical components through assessing a feasibility of a provisional recognition by recognizing various presentation components thereof in succesive steps,

    **characterized in that**, along with the successive steps of said recognizing, a limited set of hypotheses is built as regarding said presentation, which hypotheses pertain to a combination of components, and which hypotheses are matched with an associated reliability level at predetermined instants along said steps and, upon non-meeting said reliability level with respect to one or more of said components as signalling an impending dead-end situation, improving such feasibility through driving the method to an error recovery procedure for the latter such one or more components to improve the reliability of one or more elements of said limited set.

2. A method as claimed in Claim 1, wherein said user presentation represents a user request that is received in the form of speech.

3. A method as claimed in Claim 1, wherein such reliability level is co-determined by one or more interference parameters that indicate an actual adversity for such recognizing.

4. A method as claimed in Claim 1, wherein said reliability level is assessed for a single one of said hypotheses.

5. A method as claimed in Claim 1, wherein said reliability is based on a renormalized probability of the "set of the best".

6. A method as claimed in Claim 1, wherein said reliability is based upon restricting said "set of the best" to a predetermined number of such hypotheses.

7. A method as claimed in Claim 1, wherein said reliability is based upon restricting said "set of the best" to hypotheses that have at most a predetermined differential score with respect to an actually most reliable one of said hypotheses.

8. A device being arranged to implement as method as recited in Claim 1, said device having recognizing means for receiving and recognizing a user presentation that is represented as a plurality of physical components through assessing a feasibility of a provisional recognition by recognizing various presentation components in successive steps, **characterized by** comprising hypothesis building means fed by said recognizing means for building a limited set of hypothesis as regarding said presentation along with the successive steps of said recognizing, which hypothesis pertain to a combination of components, and which hypotheses are matched with an associated reliability level at predetermined points along said steps, and having drive signaling output means fed to said recognizing means for, upon non-meeting said reliability level with respect to one or more of said components as signaling an impending dead-end situation, improving such feasibility through driving the recognizing means to an error recovery procedure for the latter such one or more components to improve the reliability of one or more elements of said limited set.

**Patentansprüche**

1. Verfahren zum Erkennen einer Benutzereingabe, die als eine Vielzahl von physischen Komponenten dargestellt wird, durch Schätzen einer Durchführbarkeit einer vorläufigen Erkennung, indem verschiedene Eingabekomponenten in aufeinander folgenden Schritten erkannt werden,

    **dadurch gekennzeichnet, dass** zusammen mit den aufeinander folgenden Schritten des genannten Erkennens ein begrenzter Hypothesensatz hinsichtlich der genannten Eingabe aufgestellt wird, wobei die Hypothesen zu einer Kombination von Komponenten gehören und mit einem zugehörigen Zuverlässigkeitsgrad zu vorher festgelegten Zeitpunkten während der genannten Schritte abgeglichen werden und dass, falls sie nicht mit dem genannten Zuverlässigkeitsgrad hinsichtlich einer oder mehrerer der genannten Komponenten übereinstimmen als Hinweis auf eine sich abzeichnende ausweglose Situation, eine derartige Durchführbarkeit verbessert wird, indem das Verfahren zu einer Fehlerkorrektur an der letzteren derartiger einer oder mehrerer Komponenten führt, um die Zuverlässigkeit von einem oder mehreren Elementen des genannten begrenzten Satzes zu verbessern.

2. Verfahren nach Anspruch 1, wobei die genannte Benutzereingabe eine Benutzeranfrage darstellt, die in Form von Sprache empfangen wird.

3. Verfahren nach Anspruch 1, wobei ein derartiger Zuverlässigkeitsgrad von einem oder mehreren Störparametern mit bestimmt wird, die eine aktuelle Beeinträchtigung für eine derartige Erkennung anzeigen.

4. Verfahren nach Anspruch 1, wobei der genannte Zuverlässigkeitsgrad für eine einzige der genannten Hypothesen geschätzt wird.

5. Verfahren nach Anspruch 1, wobei die genannte Zuverlässigkeit auf einer erneut normalisierten Wahrscheinlichkeit des "Satzes der Besten" basiert.

6. Verfahren nach Anspruch 1, wobei die genannte Zuverlässigkeit auf der Einschränkung des genannten "Satzes der Besten" auf eine vorher festgelegte Zahl derartiger Hypothesen basiert.

7. Verfahren nach Anspruch 1, wobei die genannte Zuverlässigkeit auf der Einschränkung des genannten "Satzes der Besten" auf Hypothesen basiert, die höchstens eine vorher festgelegte Trefferquotendifferenz in Bezug auf eine aktuell zuverlässigste der genannten Hypothesen aufweist.

8. Vorrichtung, die so ausgelegt ist, dass sie ein Verfahren nach Anspruch 1 ausführt, wobei die genannte Vorrichtung Folgendes umfasst: Erkennungsmittel zum Empfangen und Erkennen einer Benutzereingabe, die als eine Vielzahl physischer Komponenten dargestellt ist, durch Schätzen einer Durchführbarkeit einer vorläufigen Erkennung, indem verschiedene Eingabekomponenten in aufeinander folgenden Schritten erkannt werden, **dadurch gekennzeichnet, dass** sie Mittel zum Aufstellen von Hypothesen umfasst, die von den genannten Erkennungsmitteln versorgt werden, um einen begrenzten Satz von Hypothesen hinsichtlich der genannten Eingabe während der aufeinander folgenden Schritte der genannten Erkennung aufzustellen, wobei die Hypothesen zu einer Kombination von Komponenten gehören und mit einem zugehörigen Zuverlässigkeitsgrad an vorher festgelegten Punkten während der genannten Schritte abgeglichen werden, und über Ausgabemittel zur Ansteuerungssignalisierung verfügt, die den genannten Erkennungsmitteln zugeführt werden, um bei Nichtübereinstimmen des genannten Zuverlässigkeitsgrades in Bezug auf eine oder mehrere der genannten Komponenten als Hinweis auf eine sich abzeichnende ausweglose Situation, eine derartige Durchführbarkeit zu verbessern, indem die Erkennungsmittel zu einem Fehlerkorrekturvorgang für die letztere derartige eine oder mehrere Komponenten veranlasst werden, um die Zuverlässigkeit eines oder mehrerer Elemente des genannten begrenzten Satzes zu verbessern.

## Revendications

1. Procédé de reconnaissance d'une présentation utilisateur qui est représentée par une pluralité de composantes physiques par l'évaluation d'une faisabilité d'une reconnaissance provisoire en reconnaissant diverses composantes de présentation de celle-ci par étapes successives ;
   **caractérisé en ce que**, en même temps que les étapes successives de ladite reconnaissance, un jeu limité d'hypothèses est construit relativement à ladite présentation, lesquelles hypothèses se rapportent à une combinaison de composantes, et lesquelles hypothèses sont comparées à un niveau de fiabilité associé à des instants prédéterminés au cours desdites étapes et, en cas de non-correspondance dudit niveau de fiabilité avec une ou plusieurs desdites composantes, indiquant une situation sans issue imminente, l'amélioration d'une telle faisabilité en faisant passer le procédé par une procédure de reprise en cas d'erreur pour cette dernière ou ces dernières composantes pour améliorer la fiabilité d'un ou de plusieurs éléments dudit jeu limité.

2. Procédé suivant la revendication 1, dans lequel ladite présentation utilisateur représente une demande utilisateur qui est reçue sous la forme de parole.

3. Procédé suivant la revendication 1, dans lequel ledit niveau de fiabilité est déterminé conjointement par un ou plusieurs paramètres de parasites qui indiquent un inconvénient réel pour une telle reconnaissance.

4. Procédé suivant la revendication 1, dans lequel ledit niveau de fiabilité est évalué pour une seule desdites hypothèses.

5. Procédé suivant la revendication 1, dans lequel ladite fiabilité est basée sur une probabilité renormalisée du "jeu des meilleurs".

6. Procédé suivant la revendication 1, dans lequel ladite fiabilité est basée sur la limitation dudit "jeu des meilleurs" à un nombre prédéterminé de telles hypothèses.

7. Procédé suivant la revendication 1, dans lequel ladite fiabilité est basée sur la limitation dudit "jeu des meilleurs" à des hypothèses qui ont au plus un résultat différentiel prédéterminé par rapport à une hypothèse des plus fiables à cet instant parmi lesdites hypothèses.

8. Dispositif à même de mettre en oeuvre un procédé suivant la revendication 1, ledit dispositif comprenant des moyens de reconnaissance pour recevoir et reconnaître une présentation utilisateur qui est représentée par une pluralité de composantes physiques par l'évaluation d'une faisabilité d'une reconnaissance provisoire en reconnaissant diverses composantes de présentation par étapes successives ; **caractérisé en ce qu'**il comprend des moyens de construction d'hypothèses alimentés par lesdits moyens de reconnaissance pour construire un jeu limité d'hypothèses relativement à ladite présentation en même temps que les étapes successives de ladite reconnaissance, lesquelles hypothèses se rapportent à une combinaison de composantes, et lesquelles hypothèses sont comparées à un niveau de fiabilité associé à des instants prédéterminés au cours desdites étapes et comprenant des moyens de sortie d'indication d'exécution couplés auxdits moyens de reconnaissance pour, en cas de non-correspondance dudit niveau de fiabilité avec une ou plusieurs desdites composantes, indiquant une situation sans issue imminente, améliorer une telle fiabilité en faisant passer les moyens de reconnaissance par une procédure de reprise en cas d'erreur pour cette dernière ou ces dernières composantes pour améliorer la fiabilité d'un ou de plusieurs éléments dudit jeu limité.

FIG. 1

FIG. 2

FIG. 3